# EUROPEAN PATENT SPECIFICATION

(11) **EP 1 750 419 B1**
(45) Date of publication and mention of the grant of the patent: **21.07.2010**
(21) Application number: 06123708.7
(22) Date of filing: 01.06.2004
(51) Int. Cl.: H04M 1/02, H04M 1/03

(54) **Housing for a communication device including a cover for a display and a loudspeaker**
Gehäuse für ein Kommunikationsgerät mit einem Deckel für ein Display und einen Lautsprecher
Boîtier pour un dispositif de communication comprenant un couvercle pour un écran et un haut-parleur

(43) Date of publication of application: 07.02.2007
(62) Divisional of application: 04102445.6
(73) Proprietor: RESEARCH IN MOTION LIMITED, Waterloo, Ontario N2L 3W8 (CA)
(72) Inventor: Holmes, John, Waterloo Ontario N2L 2T3 (CA); Simoes, Phillip, Waterloo Ontario N2L 3W8 (CA); Hawker, Larry, Waterloo Ontario N2T 2W6 (CA)
(74) Representative: Moore, Barry

(56) References cited:
- WO-A-02/34006
- WO-A-2004/054211
- FR-A- 2 798 541
- GB-A- 2 318 476
- US-B1- 6 321 070
- US-B1- 6 553 119

## Description

The invention relates to a housing for a communication device, in particular a housing that provides an enclosure for a display and a speaker of a communication device, such as a portable phone.

Typical voice communication devices, such as cellular phones, have a receiver (speaker) located at a top portion of the device and a transducer (microphone) located at the bottom portion.

In designing a communication device, the speaker must be mounted within an enclosure. Typically, the enclosure is a plastic injection moulded piece. To fix the speaker within the enclosure, the top of the enclosure is frequently designed to provide a cover for the speaker. However, this approach limits aesthetic possibilities for the device as there are limitations to colour and texture treatments available for plastics typically used in casings.

GB 2318476 A discloses a mobile telephone having removably escutcheon elements which can be removed and replaced to alter or customize the cosmetic appearance of the mobile telephone according to user preference.

There is a need for a display cover which provides an improvement over the prior art.

### GENERAL

In a first aspect, the invention provides a housing for a communication device, the housing comprising: an exterior frame, a first opening in said exterior frame for providing access to a display for the device through a front face of the device; an internal wall defined within said exterior frame spanning between lateral sides of said exterior frame to define a boundary between said first opening and a region to receive a speaker for said device to allow said speaker to project sound towards said front face; a first cavity defined in a first front area by said internal wall about said region shaped to provide acoustic tuning for said speaker; and an air channel to connect said first cavity to said region, wherein said first opening, said region and said first cavity are covered by a cover when said cover is affixed to said external frame, said cover forming a part of said front face of said device.

The housing may further comprise: a continuous recess running around said opening for receiving a cover in said frame, said cover covering said first opening for said display and said region for said speaker and providing a part of said front face of said device.

The housing may further comprise: a second cavity defined in the housing to provide acoustic tuning for the speaker; and a second air channel connecting the second cavity to a region below the speaker. Therein, the second cavity may be covered by a printed circuit board (PCB) when the PCB is assembled into the housing.

In the housing, the second cavity may span both sides of the second region.

In a second aspect, a communication device having a housing according to the first aspect is provided.

### BRIEF DESCRIPTION OF THE DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):
Figure 1A is a top plan view of a communication device associated with an embodiment of the invention;
Figure 1B is a bottom plan view of the communication device of Fig. 1A;
Figure 2 is a top exploded perspective view of selected internal components and a case section of the communication device of Figs. 1A and 1B;
Figure 3 is a top plan view of the case section of the communication device of Fig. 2; and
Figure 4 is a bottom exploded perspective view of the selected internal components and the case section of Fig. 2.

### DESCRIPTION OF PREFERRED EMBODIMENTS

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

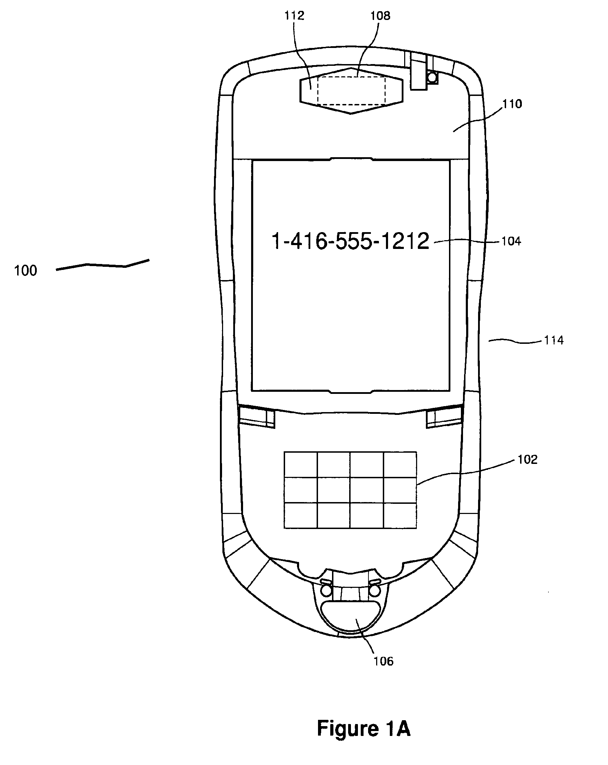

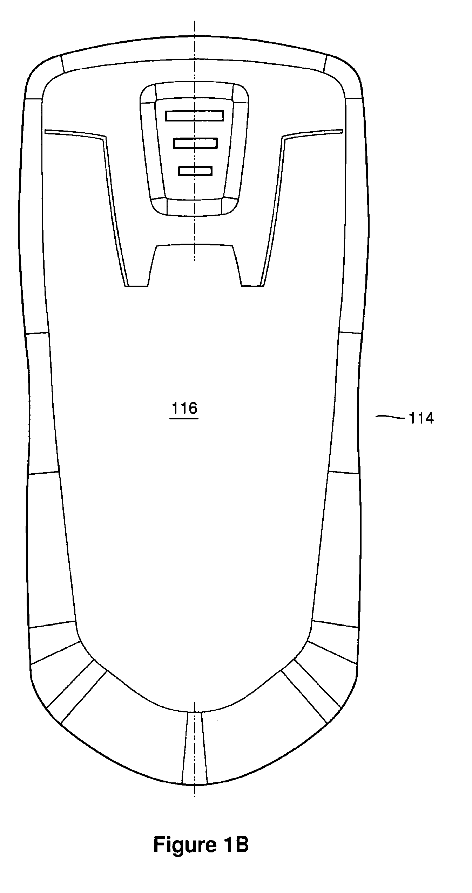

Referring to Figures 1A and 1B, communication device 100 is shown. In the embodiment, communication device 100 provides voice communications with other devices, allowing the user to hear audio signals (e.g. voices) transmitted from another device (e.g. a cellular phone). Device 100 may be a telephone, a cordless telephone, a cellular telephone, a voice-enabled personal digital assistant (PDA) or any other voice communication device. Communications may be provided via wireless systems, wired systems or a combination of both systems. As is common with voice communication devices, device 100 has a keypad 102, display 104, microphone 106 and transducer 108, i.e. speaker 108 all contained within an enclosure. For the purposes of orientation, the keypad and display are typically presented on the front face of device 10. Display 104 is an LCD device. Display cover 110 provides a transparent, translucent or non-opaque physical cover for the viewing area of display 104 and extends beyond it. Speaker cover 112 covers a recess in display cover 110. The recess is located above the installation location of speaker 108. Case 114 provides a physical enclosure for the electronics and mechanical elements for device 100. Back of case 114 is shown in Fig. 1B as bottom case section 116. General internal circuits and operations of device 100 are well known in the art and are not provided here.

Device 100 provides voice communications for a user in a familiar interface. To initiate a call, the user activates device 100, enters a telephone number to be called on keypad 102 and initiates the call. After the call is connected, the user places device 100 about his mouth and one of his ears, such that microphone 106 is near his mouth and speaker 108 is near his ear. User speaks towards microphone 106 and listens for sounds from the called party through speaker 108.

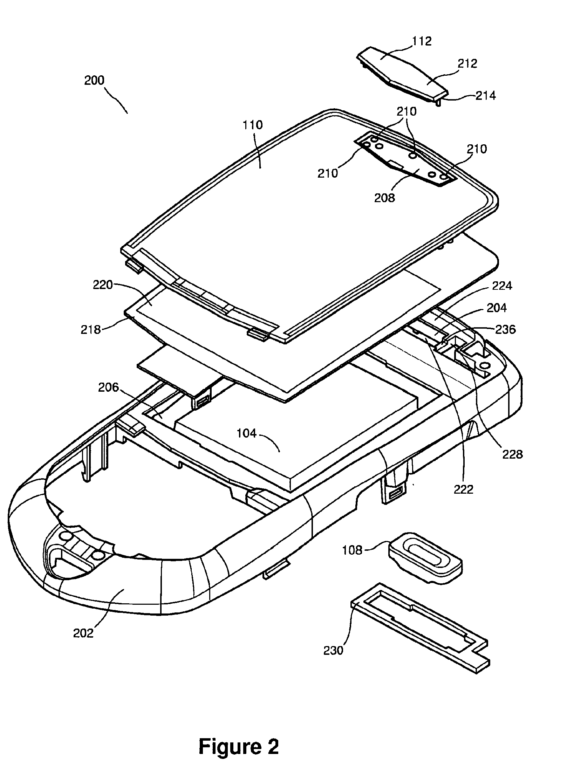

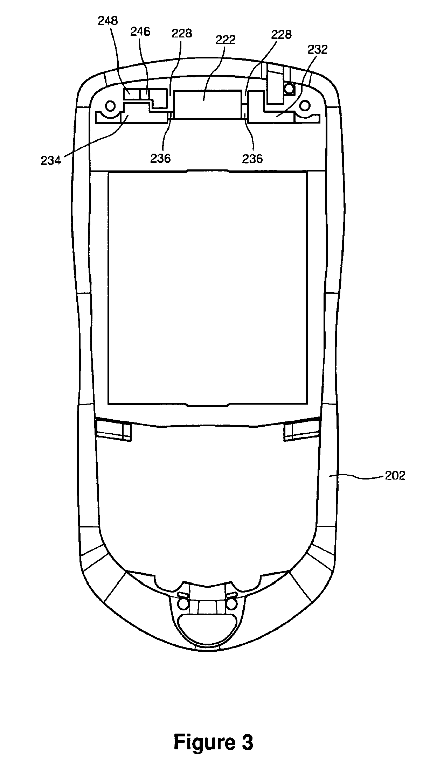

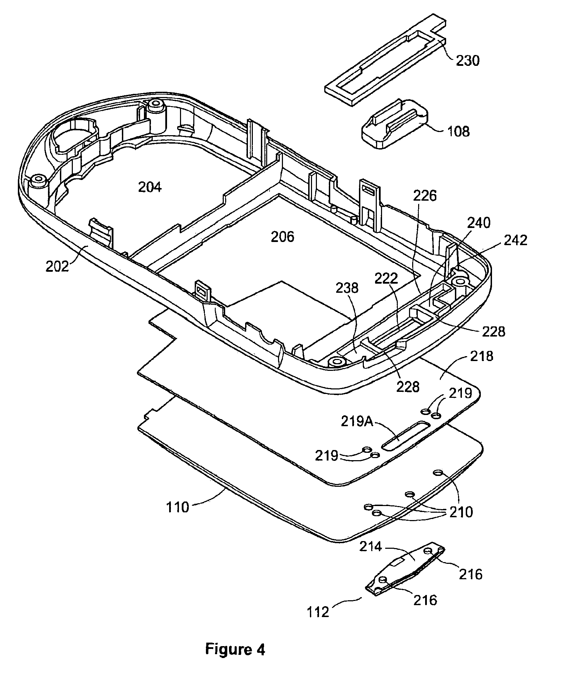

Referring collectively to Figs. 2, 3 and 4, view 200 provides an exploded top perspective view of internal and external elements in an upper portion of device 100. In particular, case 114 is comprised of top case section 202 and bottom case section 116 (Fig. 1B). Top case section 202 provides a one-piece cover for internal elements of device 100. Top case section 202 defines an exterior frame providing part of the sides of device 100 and the boundaries for the front face for device 100. Top case section 202 mates with bottom case section 116 along their respective sides. Various dimensions and fitting interfaces between top case section 202 and bottom case section 116 may be provided in other embodiments, including those known in the art. For example, alternative top and bottom case sections may generally have an exterior form as described in U.S. Design Patent D479,233, which is incorporated herein by reference. Generally, top case section 202 is shaped to define the front face of device 100 and the top portion of the exterior edge of case 114. Top section 202 also provides internal bracing for structural support for device 100 and has two openings in its front face: opening 204 allows access to keypad 102 and opening 206 allows viewing of LCD 104. Top case section 202 is preferably a plastic moulded injected casing.

In one embodiment, top section 202 has a recess running along the exterior frame about the front face, around the opening for receiving a cover in the frame in the recess. Display cover 110 fits into the recess. Display area of LCD 104 is covered by display cover 110; however, display cover 110 further extends upwardly above LCD 104 to the top edge of case section 202. As such, display cover 110 provides a single seamless structure to cover both LCD 104 and speaker 108. Accordingly, case section 202 does not have to provide a top cover for speaker 108. Advantageously, display cover 110 may be silk screened with custom lettering or graphics around display area of LCD 104 and around the area where speaker 108 is located. For acoustic purposes, display cover 110 may be made of almost any material (such as plastic), as long as the material facilitates accurate manufacturing of display cover 110 and provides a transparent, translucent or non-opaque region where display 104 will be placed underneath.

Further detail is provided on the acoustic interface between speaker 108 and display cover 110. At a top region of display cover 110, recess 208 is provided, which is a shaped contour extending inwardly within display cover 110. In the embodiment, recess 208 is a hexagonal polygon depression having a generally stunted-hexagonal shape. The floor of recess 208 is generally flat. The exterior edges of recess 208 are bevelled downward to the floor. In other embodiments, other shapes may be provided for a recess. Recess 208 has four sound holes 210 therein which provide air conduits through display cover 110. As such, holes 210 allow passage of acoustic energy from speaker 108 through display cover 110 to the ambient environment outside device 100. Two sounds holes 210 are located in the upper and lower corners of the left side of recess 208, a third sound hole 210 is located in the upper corner of the right side of recess 208, and the fourth sound hole 210 is located in the upper area about the center of the recess 208. In other embodiments, more or less sound holes may be used. A sound hole has acoustics properties determined, in part, by its dimensions, including its diameter (i.e. cross-sectional area) and length (i.e. thickness of display cover 110 in recess area 208). In this embodiment, sound holes 210 are cylindrical in shape with round openings. Other shapes and cross sections may be used. While both dimensions are important for acoustic purposes, it is possible to adjust them together to achieve a particular acoustic characteristic. In other embodiments, the device may have other systems to port the sound energy from its speaker, thereby eliminating a need for sound holes.

Speaker cover 112 is shaped to fit within recess 208. As such in the embodiment, cover 112 is a stunted hexagonal shape. Speaker cover 112 provides a cover for sound holes 210, thereby enhancing the aesthetic appearance of display cover 110. Speaker cover 112 comprises upper section 212 and lower section 214. The bottom surface of lower portion 214 fits snugly against the upper surface of recess 208. The shape of upper section 212 and lower section 214 provide a corresponding excised notch where each sound hole 210 is located, to allow sound to emit from sound holes 210 into the ambient environment of device 100. The exterior edge of speaker cover 112 has an inward ridge which is shaped to provide a gap between speaker cover 112 and the bevelled edge of recess 208, when speaker cover 112 is located in recess 208. Speaker cover 112 also has nubs thereon protruding downward from its bottom surface. Within recess 208, corresponding concave depressions in locations opposite of the nubs are provided. Nubs 216 in speaker cover 112 fit cooperatively within depressions in recess 208 to assist in aligning speaker cover 112 within recess 208. Preferably, speaker cover 112 has a thickness such that when it is placed in recess 208, its upper surface is either flush or roughly flush with the top surface of cover 110.

It will be appreciated that in other embodiments, no recess is provided for the sound holes. Further, in other embodiments no cover is provided.

In order to secure display cover 110 to case section 202, adhesive display cover tape 218 is provided and is located between LCD 104 and display cover 110. Display cover tape 218 has double-sided adhesive thereon to affix its top surface to the bottom surface of display cover 110 and to affix its bottom surface to the top surface of case section 202. Display cover tape 218 is excised in area 220 so as to not obstruct view of LCD 104. For aesthetics, cover tape 218 is black, which enhances concealing of plastics elements beneath it and outlining of the display area of LCD 104. Display cover tape 218 has a transparent layer attached in area 220. After attaching tape 218 to display cover 110, the transparent layer is removed using a pull tab. Holes 219 and 219A are provided in tape 218 to allow continuity for an air channel between holes 210 and the interior of device 100. Hole 219A is an oblong opening and it located to be in line with sound hole 210 located in the upper middle region of recess 208. Four holes 219 are provided in a symmetric pattern about hole 219A to provide openings for the three sound holes 210 located on the exterior ends of recess 208. As such, tape 218 has a symmetric orientation of holes 219 thereon. As such, if tape 218 is placed either face up or face down over case section 202, one hole 219 will align with one sound hole 210.

Speaker 108 is located in case section 202 in upper region 222 of case section 202. Upper region 222 is generally underneath recess 208 and is bounded by internal structures in case section 202. Such structures include top wall 224, bottom wall 226 and side walls 228. The top surface of speaker 108 abuts against an internal lip at the top edge of walls 224, 226 and 228 to precisely provide an installed location for speaker 108 within region 222. The external dimensions of upper region 222 are provided to allow speaker 108 to fit snugly therein. Preferably, speaker 108 is mated to a rubber boot to assist in securely holding speaker 108 within upper region 222 and to block acoustic leaks around it.

Speaker seal 230 is provided to provide an acoustic seal in a cavity around speaker 108. It is located underneath speaker 108. Speaker seal 230 has opening 232 to allow electrical contacts of speaker 108 to engage with a PCB below it (not shown). Further detail on speaker seal 230 is provided below.

In case section 202, two acoustics cavities are provided around speaker 108 and upper region 222. Preferably, a front cavity located above speaker 108 and sound holes 210 define a Helmholtz resonator to tune high frequencies of speaker 108. Preferably, a back cavity is located behind speaker 108 and provides tuning for its lower frequency response.

The front cavity is defined in case section 202 by a volume including L-shaped cavity 232 and oblong cavity 234 and its sides and bottom surfaces are defined within case section 202. L-shaped cavity 232 and oblong cavity 234 are located immediately to the right and left of region 222, respectively. Notches 236 in side walls 228 connect L-shaped cavity 232 and oblong cavity 234 to a volume above speaker 108 to create a continuous volume for the front cavity. The bottom of the front cavity is defined by moulded floors in L-shaped cavity 232 and in oblong cavity 234 and by the top surface of speaker 108. The top of the front cavity is defined by the bottom surface of display cover tape 218. For the front cavity, tape 218 provides an acoustic seal between cover 110 and case section 202. It will be appreciated that display cover 110 provides additional structural support for the top of the front cavity. It will be appreciated that having a single piece to cover both display 104 and speaker 108 also provides a cost-effective component for device 100, as its part count is reduced.

The back cavity is defined in case section 202 by a volume including: box cavity 238, located immediately to the left of region 222; L-shaped cavity 240, located immediately to the right of region 222; and a volume directly beneath speaker 108. The sides and top surfaces are defined within case section 202. The top boundary of the back cavity is defined by the surface underneath floor of oblong cavity 234, the surface underneath floor of L-shaped cavity 232 and the bottom surface of speaker 108. The perimeter of the back cavity is defined by bottom wall 226 and the collective perimeters of box cavity 238, L-shaped cavity 240 and speaker 108. The perimeter is comprised in part by lower wall 224 and other wall extrusions descending inwardly from top wall 224. More specifically the perimeter is defined by the shape of L-shaped cavity 240, speaker 108 and box cavity 238. The bottom boundary of the back cavity is defined by bottom edge 242 of the perimeter defined by the end of lower wall 224 and the end of the other wall extrusions. Seal 230 is shaped to cover the perimeter defined by bottom edge 242 and fits snugly thereagainst. When device 100 is fully assembled, its PCB (not shown) is snugly fit against seal 230 and its PCB defines the bottom wall of the back cavity.

In the back cavity, bleed hole 246 is located in the ceiling of box cavity 238 and provides an air connection to an intermediate cavity 248 located about the front cavity. Preferably, intermediate cavity 248 is located in a front portion of case section 202 and its sides and bottom surfaces are defined within case section 202. Intermediate cavity 248 provides a port through display cover 110 via sound hole 210 located in the upper left of the recessed area 208. Bleed hole 246, intermediate cavity 248 and sound ports 210, provides further tuning of the acoustics using the front and back cavities. In other embodiments, the size, shape and location of a bleed hole can be modified relative to the top and back cavities to effect different acoustic tuning characteristics. The top of the intermediate front cavity 248 is defined by the bottom surface of display cover tape 218. For intermediate cavity 248, tape 218 provides an acoustic seal between cover 110 and case section 202. It will be appreciated that display cover 110 provides additional structural support for the top of the intermediate cavity.

It will be seen that in the embodiment, adhesive tape 218 provides an acoustic seal so that sounds from internal cavity 248 do not leak into any of upper region 222, L-shaped cavity 232 and oblong cavity 234.

It is preferable that the front cavity and intermediate cavity 248 are isolated from each other. As such, the location and dimension of their respective sound holes 210 in case section 202 and holes 219 in tape 218 are preferably made such that for each cavity, its associated sound hole 210 and hole 219 do not overlap with the either of the sound hole 210 or the hole 219 for the other cavity.

A notable feature of the embodiment is that display cover 110 forms part of the front cavity and part of intermediate cavity 248. By sealing display cover 110 to areas of case section 202 with double sided adhesive tape 218, the front cavity and intermediate cavity 248 are created, eliminating the need for use of an extra part.

The embodiment also has a small hole (not shown), approximately 0.75 mm diameter, through the PCB directly behind speaker 108. The hole is used to further tune the frequency response for speaker 108. The hole is covered with an acoustic mesh (e.g. a woven polyester material) to provide acoustic resistance and control resonance characteristics of the hole. Other types of mesh may be used or smaller holes could be drilled in the PCB to produce different acoustic characteristics. In other embodiments, mesh may be placed over one or more of sound holes 210. A nearly acoustically transparent mesh (i.e., a mesh having a very low acoustic resistance) may be used on sound holes 210 to prevent debris from entering device 100 through sound holes 210.

Other embodiments may use other shapes for their front and back cavities and may dispense with one or both of the cavities.

While the embodiment defines display cover 110 as being generally rectangular, in other embodiments, the display cover can be any shape and size, as long as it covers both the display region and the speaker of the communication device. Further, if the display and the speaker are not on the same face of a device, the display cover can be shaped to bend at the interface line between the two faces and cover both the display and the speaker.

Although the invention has been described with reference to certain specific embodiments, various modifications thereof will be apparent to those skilled in the art without departing from the scope of the invention as outlined in the claims appended hereto.

## Claims

1. A housing for a communication device (100), the housing comprising:
an exterior frame (114);
a first opening (206) in said exterior frame for providing access to a display (104) for said device through a front face of said device (100);
an internal wall (224, 226, 228) defined within said exterior frame spanning between lateral sides of said exterior frame (114) to define a boundary between said first opening (206) and a region (222) to receive a speaker (108) for said device to allow said speaker to project sound towards said front face;
a first cavity (232) defined in a first front area by said internal wall (224, 226, 228) about said region (222) shaped to provide acoustic tuning for said speaker (108); and
an air channel to connect said first cavity (232) to said region (222),
wherein said first opening (206), said region (222) and said first cavity (232) are covered by a cover (110) when said cover (110) is affixed to said external frame (114), said cover providing a part of said front face of said device (100).

2. The housing as claimed in claim 1, further comprising a continuous recess running around said first opening (206) and said region for receiving said cover (110) in said frame.

3. The housing as claimed in claim 2, further comprising:
a second cavity (234) defined in a first rear area by said internal wall (224, 226, 228) to provide further acoustic tuning for said speaker (108); and
a second air channel connecting said second cavity to said speaker.

4. The housing as claimed in claim 3, wherein an open part of said second cavity is covered by a printed circuit board 'PCB' when said PCB is assembled to said external frame (114).

5. The housing as claimed in claim 4, wherein said second cavity spans both sides of said second region (222).

6. The housing as claimed in any of the preceding claims, wherein said first cavity is a Helmholtz cavity.

7. The housing as claimed in any of the preceding claims, further comprising a third cavity (232) defined in a second front area in said internal wall (224, 226, 228) about said region (222) shaped to provide further acoustic tuning for said speaker (108), wherein said third cavity is also covered by said cover when said cover is affixed to said external frame.

8. The housing as claimed in claim 7, wherein said first cavity is located on one side of said region and said third cavity is located on an opposite side of said region to said first cavity.

9. The housing as claimed in any one of claims 3 to 7, further comprising:
a fourth acoustic cavity (238 or 240) defined in a second rear area in said internal wall (224; 226, 228) in a second spaced relationship to said region (222); and a third air channel in said internal wall (224, 225, 228) connecting said fourth acoustic cavity to said region (222).

10. The housing as claimed in claim 9, further comprising:
an intermediate acoustic cavity (248) defined in a third rear area in said internal wall (224, 226, 228) in a third spaced relationship to said fourth acoustic cavity (238 or 240), said intermediate cavity (248) being connected to a bleed hole (246) in said internal wall (224, 226, 228) connecting said intermediate acoustic cavity to said fourth acoustic cavity (238 or 240).

11. The housing as claimed in any of the preceding claims, wherein said housing and said cover are shaped to have said cover extend to a top edge of said housing.

12. The housing as claimed in any of the preceding claims, wherein said housing comprises a top case section and a bottom case section, wherein said top case section contains said internal wall.

13. A communication device having a housing as claimed in any one of claims 1 to 12.

## Patentansprüche

1. Gehäuse für eine Kommunikationsvorrichtung (100), wobei das Gehäuse aufweist:
einen äußeren Rahmen (114);
eine erste Öffnung (206) in dem äußeren Rahmen zum Vorsehen eines Zugangs zu einer Anzeige (104) für die Vorrichtung über eine Vorderseite der Vorrichtung (100);
eine interne Wand (224, 226, 228), die in dem äußeren Rahmen definiert ist, die sich zwischen Seitenwänden des äußeren Rahmens (114) erstreckt,
um eine Grenze zwischen der ersten Öffnung (206) und einem Bereich (222) zu definieren, um einen Lautsprecher (108) für die Vorrichtung aufzunehmen, um zu ermöglichen, dass der Lautsprecher Schall in Richtung der Vorderseite projiziert;
einen ersten Hohlraum (232), der in einem ersten Vorderseitenbereich durch die interne Wand (224, 226, 228) an dem Bereich (222) definiert ist, geformt, um ein akustisches Tuning für den Lautsprecher (108) vorzusehen; und
einen Luftkanal, um den ersten Hohlraum (232) mit dem Bereich (222) zu verbinden,
wobei die erste Öffnung (206), der Bereich (222) und der erste Hohlraum (232) durch eine Abdeckung (110) abgedeckt sind, wenn die Abdeckung (110) an dem externen Rahmen (114) befestigt ist, wobei die Abdeckung einen Teil der Vorderseite der Vorrichtung (100) darstellt.

2. Gehäuse gemäß Anspruch 1, das weiter eine kontinuierliche Ausnehmung aufweist, die um die erste Öffnung (206) und den Bereich zur Aufnahme der Abdeckung (110) in dem Rahmen verläuft.

3. Gehäuse gemäß Anspruch 2, das weiter aufweist:
einen zweiten Hohlraum (234), der in einem ersten hinteren Bereich durch die interne Wand (224, 226, 228) definiert ist, um ein weiteres akustisches Tuning für den Lautsprecher (108) vorzusehen; und
einen zweiten Luftkanal, der den zweiten Hohlraum mit dem Lautsprecher verbindet.

4. Gehäuse gemäß Anspruch 3, wobei ein offener Teil des zweiten Hohlraums durch eine Leiterplatte (PCB - printed circuit board) abgedeckt ist, wenn die PCB an dem externen Rahmen (114) angebracht ist.

5. Gehäuse gemäß Anspruch 4, wobei sich der zweite Hohlraum an beiden Seiten des zweiten Bereichs (222) erstreckt.

6. Gehäuse gemäß einem der vorhergehenden Ansprüche, wobei der erste Hohlraum ein Helmholtz-Resonator ist.

7. Gehäuse gemäß einem der vorhergehenden Ansprüche, das weiter aufweist einen dritten Hohlraum (232), der in einem zweiten Vorderseitenbereich in der internen Wand (224, 226, 228) an dem Bereich (222) definiert ist, geformt, um ein weiteres akustisches Tuning für den Lautsprecher (108) vorzusehen, wobei der dritte Hohlraum ebenfalls durch die Abdeckung abgedeckt ist, wenn die Abdeckung an dem externen Rahmen angebracht ist.

8. Gehäuse gemäß Anspruch 7, wobei sich der erste Hohlraum auf einer Seite des Bereichs befindet und sich der dritte Hohlraum auf einer gegenüberliegenden Seite des Bereichs zu dem ersten Hohlraum befindet.

9. Gehäuse gemäß einem der Ansprüche 3 bis 7, das weiter aufweist:
einen vierten akustischen Hohlraum (238 oder 240), der in einem zweiten hinteren Bereich in der internen Wand (224, 226, 228) in einer zweiten beabstandeten Beziehung zu dem Bereich (222) definiert ist; und einen dritten Luftkanal in der internen Wand (224, 226, 228), der den vierten akustischen Hohlraum mit dem Bereich (222) verbindet.

10. Gehäuse gemäß Anspruch 9, das weiter aufweist:
einen dazwischenliegenden akustischen Hohlraum (248), der in einem dritten hinteren Bereich in der internen Wand (224, 226, 228) in einer dritten beabstandeten Beziehung zu dem vierten akustischen Hohlraum (238 oder 240) definiert ist, wobei der dazwischenliegende Hohlraum (248) mit einem Ablassloch (246) in der internen Wand (224, 226, 228) verbunden ist, das den dazwischenliegenden akustischen Hohlraum mit dem vierten akustischen Hohlraum (238 oder 240) verbindet.

11. Gehäuse gemäß einem der vorhergehenden Ansprüche, wobei das Gehäuse und die Abdeckung derart geformt sind, dass sich die Abdeckung bis zu einem oberen Rand des Gehäuses erstreckt.

12. Gehäuse gemäß einem der vorhergehenden Ansprüche, wobei das Gehäuse einen oberen Gehäuseabschnitt und einen unteren Gehäuseabschnitt aufweist, wobei der obere Gehäuseabschnitt die interne Wand aufweist.

13. Kommunikationsvorrichtung mit einem Gehäuse gemäß einem der Ansprüche 1 bis 12.

## Revendications

1. Boîtier pour un dispositif de communication (100), le boîtier comprenant :
un cadre externe (114) ;
une première ouverture (206) dans ledit cadre externe pour donner l'accès à un écran (104) pour ledit dispositif à travers une face frontale dudit dispositif (100) ;
une paroi interne (224, 226, 228) définie dans ledit cadre externe qui s'étend entre des côtés latéraux dudit cadre externe (114) de sorte à définir une délimitation entre ladite première ouverture (206) et une région (222) pour recevoir un haut-parleur (108) pour ledit dispositif afin de permettre audit haut-parleur de projeter du son vers ladite face frontale ;
une première cavité (232) définie dans une première surface frontale par ladite paroi interne (224, 226, 228) autour de ladite région (222) conformée pour procurer une syntonisation acoustique pour ledit haut-parleur (108) ; et
un canal d'air pour relier ladite première cavité (232) à ladite région (222),
où ladite première ouverture (206), ladite région (222) et ladite première cavité (232) sont couvertes par un capot (110) lorsque ledit capot (110) est fixé audit cadre externe (114), ledit capot fournissant une partie de ladite face frontale dudit dispositif (100).

2. Boîtier tel que revendiqué dans la revendication 1, comprenant en outre un évidement continu s'étendant autour de ladite première ouverture (206) et de ladite région pour recevoir ledit capot (110) dans ledit cadre.

3. Boîtier tel que revendiqué dans la revendication 2, comprenant en outre :
une deuxième cavité (234) définie dans une première surface de dos par ladite paroi interne (224, 226, 228) pour fournir une syntonisation acoustique supplémentaire pour ledit haut-parleur (108) ; et
un deuxième canal d'air reliant ladite deuxième cavité audit haut-parleur.

4. Boîtier tel que revendiqué dans la revendication 3, dans lequel une partie ouverte de ladite deuxième cavité est couverte par une carte de circuit imprimé 'PCB' lorsque ladite PCB est assemblée audit cadre externe (114).

5. Boîtier tel que revendiqué dans la revendication 4, dans lequel ladite deuxième cavité s'étend des deux côtés de ladite deuxième région (222).

6. Boîtier tel que revendiqué dans l'une des revendications précédentes, dans lequel ladite première cavité est une cavité de Helmholtz.

7. Boîtier tel que revendiqué dans l'une des revendications précédentes, comprenant en outre une troisième cavité (232) définie dans une deuxième surface frontale dans ladite paroi interne (224, 226, 228) autour de ladite région (222) conformée de manière à fournir une syntonisation acoustique supplémentaire pour ledit haut-parleur (108), où ladite troisième cavité est également couverte par ledit capot lorsque ledit capot est fixé audit cadre externe.

8. Boîtier tel que revendiqué dans la revendication 7, dans lequel ladite première cavité est située sur un côté de ladite région et ladite troisième cavité est située sur un côté opposé de ladite région par rapport à ladite première cavité.

9. Boîtier tel que revendiqué dans l'une quelconque des revendications 3 à 7, comprenant en outre :
une quatrième cavité acoustique (238 ou 240) définie dans une deuxième surface de dos dans ladite paroi interne (224, 226, 228) dans une deuxième relation espacée par rapport à ladite région (222) ; et un troisième canal d'air dans ladite paroi interne (224, 226, 228) reliant ladite quatrième cavité acoustique à ladite région (222).

10. Boîtier tel que revendiqué dans la revendication 9, comprenant en outre :
une cavité acoustique intermédiaire (248) définie dans une troisième surface de dos dans ladite paroi interne (224, 226, 228) dans une troisième relation espacée par rapport à ladite quatrième cavité acoustique (238 ou 240), ladite cavité intermédiaire (248) étant reliée à un orifice de fuite (126) dans ladite paroi interne (224, 226, 228) reliant ladite cavité acoustique intermédiaire à ladite quatrième cavité acoustique (238 ou 240).

11. Boîtier tel que revendiqué dans l'une des revendications précédentes, dans lequel ledit boîtier et ledit capot sont conformés de façon à permettre audit capot de s'étendre jusqu'à un bord supérieur dudit boîtier.

12. Boîtier tel que revendiqué dans l'une des revendications précédentes, dans lequel ledit boîtier comprend une section supérieure d'étui et une section inférieure d'étui, où ladite section supérieure d'étui contient ladite paroi interne.

13. Dispositif de communication ayant un boîtier selon l'une quelconque des revendications 1 à 12.
